# EUROPEAN PATENT APPLICATION

(11) **EP 4 438 974 A1**
(43) Date of publication of application: **02.10.2024**
(21) Application number: 21965632.9
(22) Date of filing: 25.11.2021
(51) Int. Cl.: F25B 1/00

(54) **AIR CONDITIONER**

(71) Applicant: MITSUBISHI ELECTRIC CORPORATION, Chiyoda-ku Tokyo 100-8310 (JP)
(72) Inventor: NAGATA, Ryuichi, Tokyo 100-8310 (JP)
(74) Representative: Pfenning, Meinig & Partner mbB
(86) International application number: PCT/JP2021/043245
(87) International publication number: WO 2023/095260

(57) **Abstract**

An air conditioner (100) includes a refrigerant circuit in which a non-azeotropic refrigerant mixture circulates. The refrigerant circuit includes a compressor (1), a four-way valve (2), a first heat exchanger (3), a first expansion valve (4), and a second heat exchanger (5). The four-way valve is configured to switch between a first state in which the non-azeotropic refrigerant mixture flows sequentially through the compressor, the first heat exchanger, the first expansion valve, and the second heat exchanger, and a second state in which the non-azeotropic refrigerant mixture flows sequentially through the compressor, the second heat exchanger, the first expansion valve, and the first heat exchanger. The refrigerant circuit further includes a third heat exchanger (10) provided to allow heat exchange between the non-azeotropic refrigerant mixture flowing between the first heat exchanger and the first expansion valve or the non-azeotropic refrigerant mixture flowing between the first expansion valve and the second heat exchanger, and the non-azeotropic refrigerant mixture flowing between the four-way valve and a suction port of the compressor. The non-azeotropic refrigerant mixture is a two-refrigerant mixture of R32 and R1234yf. A mass fraction of R32 in the non-azeotropic refrigerant mixture is 30% by mass or more.

## Description

### TECHNICAL FIELD

The present disclosure relates to an air conditioner.

### BACKGROUND ART

Japanese Patent Laying-Open No. 08-75290 discloses an air conditioner in which a non-azeotropic refrigerant mixture is sealed and which includes an auxiliary heat exchanger that performs heat exchange between refrigerant flowing between an expansion valve and an indoor/outdoor connecting pipe and a non-azeotropic refrigerant mixture sucked into a compressor.

### CITATION LIST

### PATENT LITERATURE

PTL 1: Japanese Patent Laying-Open No. 08-75290

### SUMMARY OF INVENTION

### TECHNICAL PROBLEM

A non-azeotropic refrigerant mixture, which contains refrigerant having a relatively high pressure and refrigerant having a relatively low pressure, may experience a temperature gradient between a temperature of a saturation liquid and a temperature of a saturated vapor at the same pressure. In the non-azeotropic refrigerant mixture having a large temperature gradient, than in the non-azeotropic refrigerant mixture with a small temperature gradient, the temperature of the non-azeotropic refrigerant mixture flowing through an evaporator approaches the temperature of the air, and accordingly, a degree of opening of an expansion valve needs to be reduced more to reduce the temperature of the non-azeotropic refrigerant mixture flowing into the evaporator. However, frost forms easily in the evaporator as the temperature is reduced sufficiently, leading to a decrease in performance.

The present inventors have arrived at an air conditioner according to the present disclosure to achieve improved performance as compared with the air conditioner described above.

### SOLUTION TO PROBLEM

An air conditioner according to an embodiment of the present disclosure includes a refrigerant circuit in which a non-azeotropic refrigerant mixture circulates. The refrigerant circuit includes a compressor, a four-way valve, a first heat exchanger, a first expansion valve, and a second heat exchanger. The four-way valve is configured to switch between a first state in which the non-azeotropic refrigerant mixture flows sequentially through the compressor, the first heat exchanger, the first expansion valve, and the second heat exchanger, and a second state in which the non-azeotropic refrigerant mixture flows sequentially through the compressor, the second heat exchanger, the first expansion valve, and the first heat exchanger. The refrigerant circuit further includes a third heat exchanger provided to allow heat exchange between the non-azeotropic refrigerant mixture flowing between the first heat exchanger and the first expansion valve or the non-azeotropic refrigerant mixture flowing between the first expansion valve and the second heat exchanger, and the non-azeotropic refrigerant mixture flowing between the four-way valve and a suction port of the compressor. The non-azeotropic refrigerant mixture is a two-refrigerant mixture of R32 and R1234yf. A mass fraction of R32 in the non-azeotropic refrigerant mixture is 30% by mass or more.

An air conditioner according to another embodiment of the present disclosure includes the refrigerant circuit described above. The non-azeotropic refrigerant mixture is a three-refrigerant mixture including R32, R1234yf, and R1123. In the non-azeotropic refrigerant mixture, a mass fraction of R32 is 18% by mass or more, and a mass fraction of R1234yf is lower than a mass fraction of R1123.

### ADVANTAGEOUS EFFECTS OF INVENTION

The air conditioner according to one embodiment of the present disclosure is filled with the non-azeotropic refrigerant mixture which is the two-refrigerant mixture including R32 and R1234yf and in which the mass fraction of R32 is 30% by mass or more, and accordingly, has improved performance as compared with an air conditioner which is filled with a non-azeotropic refrigerant mixture such as the two-refrigerant mixture described above and in which the mass fraction of R32 is less than 30%.

The air conditioner according to another embodiment of the present disclosure is filled with a non-azeotropic refrigerant mixture which is a three-refrigerant mixture including R32, R1234yf, and R1123 in which a mass fraction of R32 is 18% by mass or more and a mass fraction of R1234yf is lower than a mass fraction of R1123, and accordingly, has improved performance as compared with an air conditioner which is filled with a non-azeotropic refrigerant mixture and in which a mass fraction of R32 is less than 18% and a mass fraction of R1234yf is higher than a mass fraction of R1123.

### BRIEF DESCRIPTION OF DRAWINGS

Fig. 1 is a block diagram showing an air conditioner according to Embodiment 1.
Fig. 2 is a diagram for illustrating a third heat exchanger example of the air conditioner according to Embodiment 1.
Fig. 3 is a diagram for illustrating another third heat exchanger example of the air conditioner according to Embodiment 1.

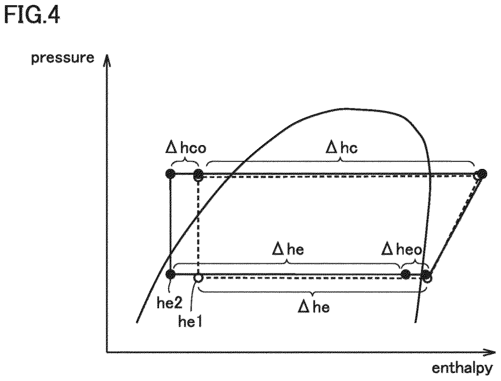

Fig. 4 shows a P-h diagram (Mollier diagram) in which the solid line indicates the relationship between enthalpy and pressure of a non-azeotropic refrigerant mixture that circulates in a refrigerant circuit when the air conditioner according to Embodiment 1 is in a second state, and the dashed line indicates a non-azeotropic refrigerant mixture that circulates in a refrigerant circuit when an air conditioner according to Comparative Example 1, which is different from the air conditioner according to Embodiment 1 only in that it does not include the third heat exchanger, is in the second state.
Fig. 5 is a graph for illustrating the relationship between specific enthalpy (kJ/kg) and refrigerant temperature (°C) of a non-azeotropic refrigerant mixture enclosed in the air conditioner according to Embodiment 1 when a pressure of the non-azeotropic refrigerant mixture is constant.
Fig. 6 is a graph in which the solid line indicates the relationship between a mass fraction (% by mass) of R32 and a temperature gradient (°C) of a non-azeotropic refrigerant mixture when the non-azeotropic refrigerant mixture is a two-refrigerant mixture including R32 and R1234yf, and the dashed line illustrates a relationship between a mass fraction (% by mass) of R32 and a temperature gradient difference (°C) of a non-azeotropic refrigerant mixture when the non-azeotropic refrigerant mixture is two-refrigerant mixture including R32 and R1234yf.
Fig. 7 is a block diagram showing a modification of the air conditioner according to Embodiment 1.
Fig. 8 is a block diagram showing an air conditioner according to Embodiment 3.
Fig. 9 is a P-h diagram in which the solid line indicates a non-azeotropic refrigerant mixture that circulates in a refrigerant circuit when the air conditioner according to Embodiment 3 is in the second state, and the dashed line indicates a non-azeotropic refrigerant mixture that circulates in a refrigerant circuit when an air conditioner according to Comparative Example 2, which is different from the air conditioner according to Embodiment 3 only in that it does not include the third heat exchanger, is in the second state.
Fig. 10 is a block diagram showing an air conditioner according to Embodiment 4.
Fig. 11 is a block diagram showing a modification of the air conditioner according to Embodiment 1.

### DESCRIPTION OF EMBODIMENTS

Embodiments of the present disclosure will be described below with reference to the drawings.

### Embodiment 1

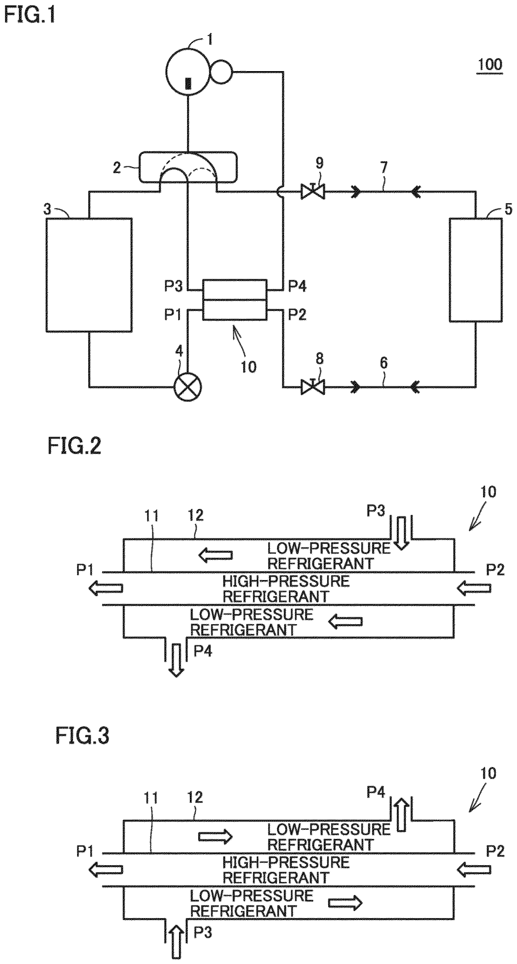

An air conditioner 100 according to Embodiment 1 includes a refrigerant circuit in which a non-azeotropic refrigerant mixture circulates. As shown in Fig. 1, the refrigerant circuit includes a compressor 1, a four-way valve 2, a first heat exchanger 3, a first expansion valve 4, a second heat exchanger 5, a liquid extension pipe 6, a gas extension pipe 7, on-off valves 8, 9, and a third heat exchanger 10.

Four-way valve 2 is provided to switch between a first state in which the non-azeotropic refrigerant mixture flows sequentially through compressor 1, first heat exchanger 3, first expansion valve 4, liquid extension pipe 6, second heat exchanger 5, and gas extension pipe 7, and a second state in which the non-azeotropic refrigerant mixture flows sequentially through compressor 1, gas extension pipe 7, second heat exchanger 5, liquid extension pipe 6, first expansion valve 4, and first heat exchanger 3. In the first state, first heat exchanger 3 serves as a condenser, and second heat exchanger 5 serves as an evaporator. In the second state, second heat exchanger 5 serves as a condenser, and first heat exchanger 3 serves as an evaporator.

Compressor 1, four-way valve 2, first heat exchanger 3, first expansion valve 4, on-off valves 8, 9, and third heat exchanger 10 are included in, for example, an outdoor unit. First heat exchanger 3 is an outdoor heat exchanger. Second heat exchanger 5 is included in, for example, an indoor unit. Second heat exchanger 5 is an indoor heat exchanger. The first state is achieved during cooling operation. The second state is achieved during heating operation.

Liquid extension pipe 6 connects first expansion valve 4 to second heat exchanger 5 in the refrigerant circuit. Gas extension pipe 7 connects four-way valve 2 to second heat exchanger 5 in the refrigerant circuit. On-off valve 8 is disposed between first expansion valve 4 and liquid extension pipe 6 in the refrigerant circuit. On-off valve 9 is disposed between four-way valve 2 and gas extension pipe 7 in the refrigerant circuit.

Third heat exchanger 10 is provided for the non-azeotropic refrigerant mixture flowing between first expansion valve 4 and second heat exchanger 5 to exchange heat with the non-azeotropic refrigerant mixture flowing between four-way valve 2 and a suction port of compressor 1. Specifically, third heat exchanger 10 is provided for the non-azeotropic refrigerant mixture flowing between first expansion valve 4 and on-off valve 8 to exchange heat with the non-azeotropic refrigerant mixture flowing between four-way valve 2 and the suction port of compressor 1.

Third heat exchanger 10 includes a first inlet/outlet port P1 connected to first expansion valve 4 in the refrigerant circuit, a second inlet/outlet port P2 connected to on-off valve 8 in the refrigerant circuit, a third inlet/outlet port P3 connected to four-way valve 2 in the refrigerant circuit, and a fourth inlet/outlet port P4 connected to the suction port of compressor 1 in the refrigerant circuit. First inlet/outlet port P1 and second inlet/outlet port P2 are connected in series to each other. Third inlet/outlet port P3 and fourth inlet/outlet port P4 are connected in series to each other.

As shown in Fig. 2, third heat exchanger 10 is, for example, a double-circular-tube heat exchanger. Third heat exchanger 10 includes a first tube 11, which includes first inlet/outlet port P1 and second inlet/outlet port P2, and a second tube 12, which includes third inlet/outlet port P3 and fourth inlet/outlet port P4. First tube 11 passes through second tube 12. Third inlet/outlet port P3 is disposed, for example, above first tube 11. Fourth inlet/outlet port P4 is disposed, for example, below first tube 11. In this case, in the second state, a flow of the non-azeotropic refrigerant mixture in first tube 11 and a flow of the non-azeotropic refrigerant mixture in second tube 12 of third heat exchanger 10 are parallel flows.

Third heat exchanger 10 may be a double-circular-tube heat exchanger shown in Fig. 3. Third inlet/outlet port P3 is disposed below first tube 11. Fourth inlet/outlet port P4 is disposed above first tube 11. In this case, in the second state, a flow of the non-azeotropic refrigerant mixture in first tube 11 and a flow of the non-azeotropic refrigerant mixture in second tube 12 of third heat exchanger 10 are opposed flows.

Third heat exchanger 10 is provided, in the second state, to reduce the temperature of the non-azeotropic refrigerant mixture condensed in second heat exchanger 5 to reduce the degree of dryness of the non-azeotropic refrigerant mixture that flows into first heat exchanger 3.

As indicated by the solid line in Fig. 4, in the second state, assuming that the specific enthalpy of the non-azeotropic refrigerant mixture condensed in second heat exchanger 5 is h1, the specific enthalpy of the non-azeotropic refrigerant mixture flowing out of third heat exchanger 10 is h2 smaller than h1. This is because in third heat exchanger 10, the non-azeotropic refrigerant mixture condensed in second heat exchanger 5 is condensed by heat exchange with the non-azeotropic refrigerant mixture flowing between four-way valve 2 and the suction port of compressor 1. The non-azeotropic refrigerant mixture flowing out of third heat exchanger 10 expands by pressure reduction in first expansion valve 4, and then flows into first heat exchanger 3. The specific enthalpy of the non-azeotropic refrigerant mixture that has evaporated in first heat exchanger 3 increases by Δhe from h2.

As indicated by the dashed line in Fig. 4, in the air conditioner according to Comparative Example 1 which is different from air conditioner 100 only in that it does not include third heat exchanger 10, in the second state, the non-azeotropic refrigerant mixture, in which a specific enthalpy condensed in second heat exchanger 5 is h1, expands by pressure reduction in first expansion valve 4 and then flows into first heat exchanger 3 without flowing through third heat exchanger 10. The specific enthalpy of the non-azeotropic refrigerant mixture that has evaporated in first heat exchanger 3 increases by Δhe from h1.

As shown in Fig. 4, air conditioner 100 and the air conditioner according to Comparative Example 1 have the same change amount Δhc of specific enthalpy of the non-azeotropic refrigerant mixture in the condenser, and also have the same change amount Δhe of specific enthalpy of the non-azeotropic refrigerant mixture in the evaporator. In air conditioner 100, a change amount Δhco of specific enthalpy of the high-pressure non-azeotropic refrigerant mixture in third heat exchanger 10 is equal to change amount Δheo of specific enthalpy of the low-pressure non-azeotropic refrigerant mixture in third heat exchanger 10. Thus, as compared with the air conditioner according to Comparative Example 1, in air conditioner 100, the P-h diagram in the second state shifts to the left (low-enthalpy side) by Δhco.

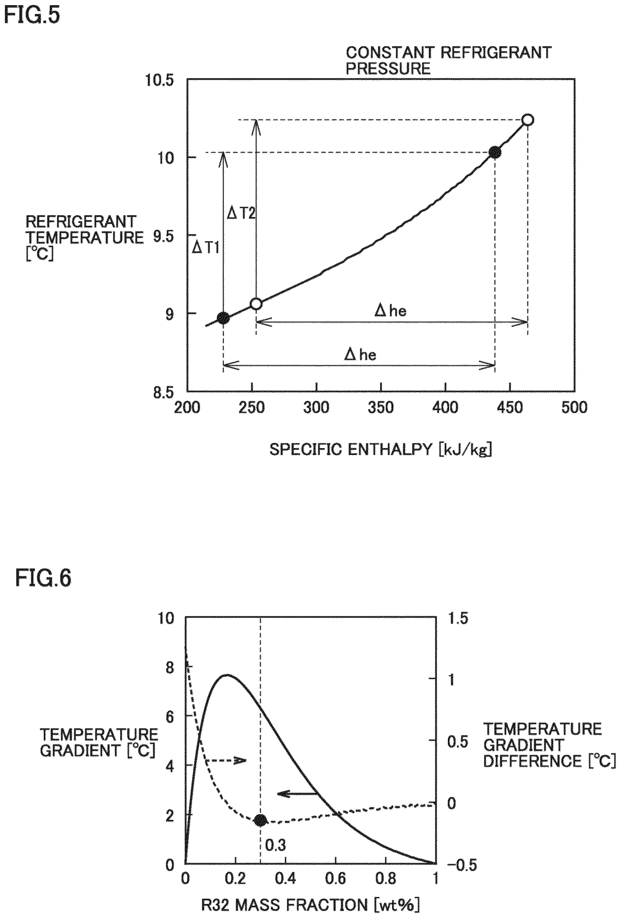

The non-azeotropic refrigerant mixture enclosed in the refrigerant circuit of air conditioner 100 is adjusted such that the relationship between specific enthalpy and refrigerant temperature shown in Fig. 5 is satisfied. Specifically, the non-azeotropic refrigerant mixture enclosed in the refrigerant circuit of air conditioner 100 has the feature that temperature decreases as the specific enthalpy is smaller and a temperature rise width ΔT1 when the specific enthalpy increases by Δhe from the state with a relatively low temperature is smaller than a temperature rise width ΔT2 when the specific enthalpy increases by Δhe from the state with a relatively high temperature.

In air conditioner 100, than in the air conditioner according to Comparative Example 1, the specific enthalpy of the non-azeotropic refrigerant mixture flowing into first heat exchanger 3 is smaller because the P-h diagram in the second state shifts to the left, and the non-azeotropic refrigerant mixture has the feature as shown in Fig. 5, resulting in a smaller temperature rise width of the non-azeotropic refrigerant mixture in first heat exchanger 3. Thus, the temperature of the non-azeotropic refrigerant mixture flowing into first heat exchanger 3 (evaporator) of air conditioner 100 can be set to be higher than the temperature of the non-azeotropic refrigerant mixture flowing into the evaporator of the air conditioner according to Comparative Example 1. As a result, in air conditioner 100, than in the air conditioner according to Comparative Example 1, a temperature difference between the non-azeotropic refrigerant mixture flowing through first heat exchanger 3 and the air is achieved more easily in the second state, thus preventing or reducing occurrence of frost formation. Consequently, air conditioner 100 has improved performance in the second state as compared with the air conditioner according to Comparative Example 1.

An example of the non-azeotropic refrigerant mixture adjusted to satisfy the relationship between specific enthalpy and refrigerant temperature shown in Fig. 5 is a two-refrigerant mixture including R32 and R1234yf. The mass fraction of R32 in this two-refrigerant mixture is 30% by mass or more. The mass fraction of R32 in this two-refrigerant mixture is, for example, 40% by mass or more.

As indicated by the solid line in Fig. 6, the temperature gradient of the non-azeotropic refrigerant mixture including R32 and R1234yf changes according to the mass fraction of R32. When the mass fraction of R32 is less than 30%, the temperature gradient of the non-azeotropic refrigerant mixture shows an upward convex peak as the mass fraction of R32 is higher. When the mass fraction of R32 is 30% by mass or more, the temperature gradient of the non-azeotropic refrigerant mixture decreases as the mass fraction of R32 is higher.

A temperature gradient difference of the non-azeotropic refrigerant mixture which is indicated by the dashed line in Fig. 6 shows a change amount of temperature gradient of the non-azeotropic refrigerant mixture when the mass fraction of R32 increases/decreases by 1%. For example, a temperature gradient difference of the non-azeotropic refrigerant mixture when the mass fraction of R32 is 30% shows a difference between the temperature gradient of the non-azeotropic refrigerant mixture when the mass fraction of R32 is 30% and the temperature gradient of the non-azeotropic refrigerant mixture when the mass fraction of R32 is 31%.

As indicated by the dashed line in Fig. 6, when the mass fraction of R32 is 30% by mass or more, a temperature gradient difference is smaller than when the mass fraction of R32 is less than 30%. Thus, when the mass fraction of R32 in the non-azeotropic refrigerant mixture including R32 and R1234yf is 30% by mass or more, a temperature rise width ΔT1 of the non-azeotropic refrigerant mixture is smaller than in the case where the mass fraction of R32 is less than 30%. As a result, in air conditioner 100, even than in an air conditioner according to Comparative Example 3 which is different from air conditioner 100 only in that the mass fraction of R32 is less than 30%, a temperature difference between the non-azeotropic refrigerant mixture and the air is achieved more easily in first heat exchanger 3, and the occurrence of frost formation is prevented or reduced.

### <Modifications>

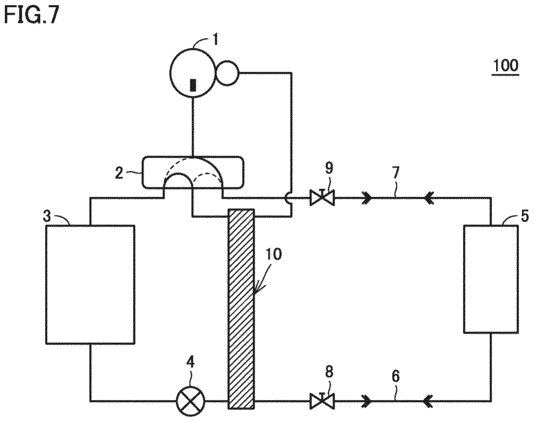

As shown in Fig. 7, third heat exchanger 10 may be configured as a heat transfer member that thermally connects a refrigerant pipe conduit that connects first expansion valve 4 to second heat exchanger 5 and a refrigerant pipe conduit that connects four-way valve 2 to the suction port of compressor 1. The material for the heat transfer member includes, for example, aluminum (Al) or copper (Cu).

### Embodiment 2

An air conditioner according to Embodiment 2 includes a basically similar configuration to that of air conditioner 100 according to Embodiment 1 and is different from air conditioner 100 in that the non-azeotropic refrigerant mixture enclosed in the refrigerant circuit is a three-refrigerant mixture including R32, R1234yf, and R1123.

The non-azeotropic refrigerant mixture enclosed in the refrigerant circuit of the air conditioner according to Embodiment 2 is also adjusted to satisfy the relationship between specific enthalpy and refrigerant temperature shown in Fig. 5.

In the three-refrigerant mixture, the mass fraction of R32 is 18% by mass or more, and the mass fraction of R1234yf is lower than the mass fraction of R1123.

Preferably, in the three-refrigerant mixture, the sum of the mass fraction of R32 and the mass fraction of R1123 is 60% by mass or more.

An air conditioner that is different from air conditioner 100 only in the mass fraction of the three-refrigerant mixture including R32, R1234yf, and R1123 is considered here as an air conditioner according to Comparative Example 4. In the non-azeotropic refrigerant mixture enclosed in the refrigerant circuit of the air conditioner according to Comparative Example 4, the mass fraction of R32 is less than 18% by mass, and the mass fraction of R1234yf is higher than the mass fraction of R1123. Such a non-azeotropic refrigerant mixture does not satisfy the relationship between specific enthalpy and refrigerant temperature shown in Fig. 5.

As compared with the air conditioner according to Comparative Example 4, in the air conditioner according to Embodiment 2, the non-azeotropic refrigerant mixture includes relatively large amounts of R32 and R1123, and the non-azeotropic refrigerant mixture has the feature as shown in Fig. 5. This can be confirmed by thermophysical properties of the non-azeotropic refrigerant mixture which are calculated by refrigerant physical properties calculation software (REFPROP available from the National Institute of Standards and Technology (NIST)). Specifically, according to the calculation results by the software, the temperature gradient of the non-azeotropic refrigerant mixture in Embodiment 2 is approximately 52% of the temperature gradient of the non-azeotropic refrigerant mixture in Comparative Example 4.

As a result, in the air conditioner according to Embodiment 2, than in the air conditioner according to Comparative Example 4, a temperature difference between the non-azeotropic refrigerant mixture flowing through first heat exchanger 3 and the air is achieved more easily in the second state, and occurrence of frost formation is prevented or reduced.

Also, according to the calculation results by the software, the compressor suction density (the gas density of the non-azeotropic refrigerant mixture sucked by compressor 1) in Embodiment 2 is higher than the compressor suction density in Comparative Example 4. Specifically, according to the calculation results by the software, the compressor suction density of the non-azeotropic refrigerant mixture in Embodiment 2 is approximately 23% higher than the compressor suction density of the non-azeotropic refrigerant mixture in Comparative Example 4.

Considering the above, since a circulation amount of the non-azeotropic refrigerant mixture for exhibiting a rated capacity during cooling operation (first state) is almost the same between the air conditioner according to Embodiment 2 and the air conditioner according to Comparative Example 4. Thus, the velocity of flow of the non-azeotropic refrigerant mixture flowing in gas extension pipe 7 decreases as the compressor suction density is higher, resulting in a smaller pressure loss of the non-azeotropic refrigerant mixture in gas extension pipe 7. In the air conditioner according to Comparative Example 4, the frequency of the compressor needs to be increased in order to secure capacity, but by so doing, an input to the compressor increases, resulting a decrease in performance.

As described above, the air conditioner according to Embodiment 2 has improved performance in the first state as compared with the air conditioner according to Comparative Example 4.

For example, the mass fraction of R32 is 19% by mass or more and 30% by mass or less. The mass fraction of R1234yf is 11% by mass or more and 25% by mass or less. The mass fraction of R1123 is 45% by mass or more and 70% by mass or less.

### Embodiment 3

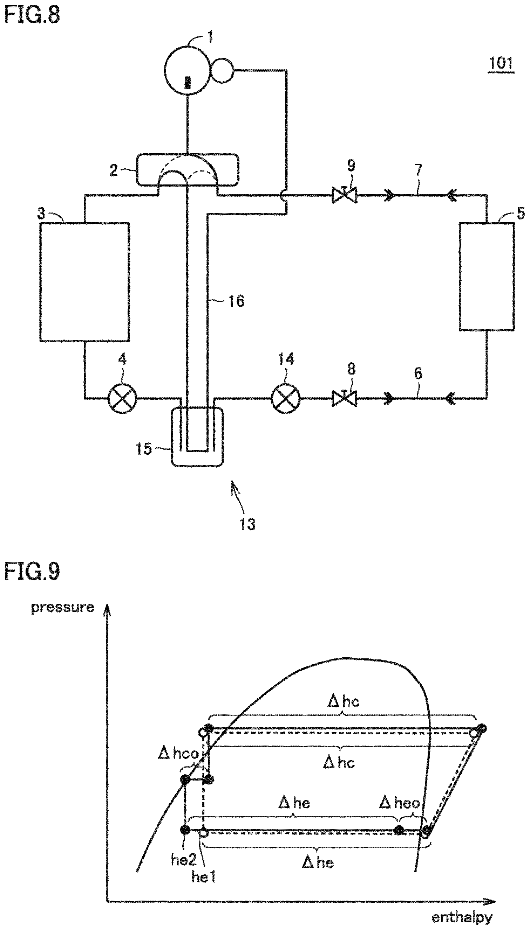

As shown in Fig. 8, an air conditioner 101 according to Embodiment 3 includes a basically similar configuration to that of air conditioner 100 according to Embodiment 1 and is different from air conditioner 100 in that it includes a third heat exchanger 13 in place of third heat exchanger 10 and further includes a second expansion valve 14.

From a different point of view, the refrigerant circuit of air conditioner 101 further includes a receiver tank 15, which stores part of the non-azeotropic refrigerant mixture flowing between first expansion valve 4 and second heat exchanger 5, second expansion valve 14 for reducing the pressure of the non-azeotropic refrigerant mixture flowing between receiver tank 15 and second heat exchanger 5, and a refrigerant pipe conduit 16, which connects four-way valve 2 to the suction port of compressor 1 and is partially extended into receiver tank 15.

Third heat exchanger 13 is configured as a receiver and includes receiver tank 15 and a part of refrigerant pipe conduit 16 which is extended into receiver tank 15.

It suffices that the non-azeotropic refrigerant mixture enclosed in the refrigerant circuit of air conditioner 101 is the same as the non-azeotropic refrigerant mixture enclosed in the refrigerant circuit of air conditioner 100 according to Embodiment 1 or the non-azeotropic refrigerant mixture enclosed in the refrigerant circuit of the air conditioner according to Embodiment 2.

Third heat exchanger 13 is provided to, in the second state, reduce the temperature of the non-azeotropic refrigerant mixture condensed in second heat exchanger 5 to reduce the degree of dryness of the non-azeotropic refrigerant mixture flowing into first heat exchanger 3.

As indicated by the solid line in Fig. 9, assuming that in the second state, the specific enthalpy of the non-azeotropic refrigerant mixture condensed in second heat exchanger 5 is h1, the specific enthalpy of the non-azeotropic refrigerant mixture that has flowed out of third heat exchanger 13 through second expansion valve 14 is h2 smaller than h1. This is because, in third heat exchanger 13, the non-azeotropic refrigerant mixture condensed in second heat exchanger 5 is condensed by heat exchange with the non-azeotropic refrigerant mixture flowing between four-way valve 2 and the suction port of compressor 1. The non-azeotropic refrigerant mixture that has flowed out of third heat exchanger 13 flows into first heat exchanger 3 through first expansion valve 4. The specific enthalpy of the non-azeotropic refrigerant mixture evaporated in first heat exchanger 3 increases by Δhe from h2.

As indicated by the dashed line in Fig. 9, in an air conditioner according to Comparative Example 2 which is different from air conditioner 100 only in that it does not include third heat exchanger 13 and second expansion valve 14, in the second state, the non-azeotropic refrigerant mixture that is condensed in second heat exchanger 5 and has a specific enthalpy of h1 expands by pressure reduction in first expansion valve 4 and then flows into first heat exchanger 3 without flowing through third heat exchanger 13. The specific enthalpy of the non-azeotropic refrigerant mixture evaporated in first heat exchanger 3 increases by Δhe from h1.

As shown in Fig. 9, between air conditioner 101 and the air conditioner according to Comparative Example 2, a change amount Δhc of specific enthalpy of the non-azeotropic refrigerant mixture in the condenser is the same, and a change amount Δhe of specific enthalpy of the non-azeotropic refrigerant mixture in the evaporator is also the same. In air conditioner 101, a change amount Δhco of specific enthalpy of high-pressure non-azeotropic refrigerant mixture in third heat exchanger 13 is equal to a change amount Δheo of specific enthalpy of low-pressure non-azeotropic refrigerant mixture in third heat exchanger 13. In air conditioner 101, thus, the P-h diagram in the second state shifts to the left (low-enthalpy side) by an amount of Δhco as compared with the air conditioner according to Comparative Example 2.

As described above, air conditioner 101 includes a basically similar configuration to the configurations of air conditioner 100 and the air conditioner according to Embodiment 2, and accordingly, can exhibit effects similar to the effects of these air conditioners.

### Embodiment 4

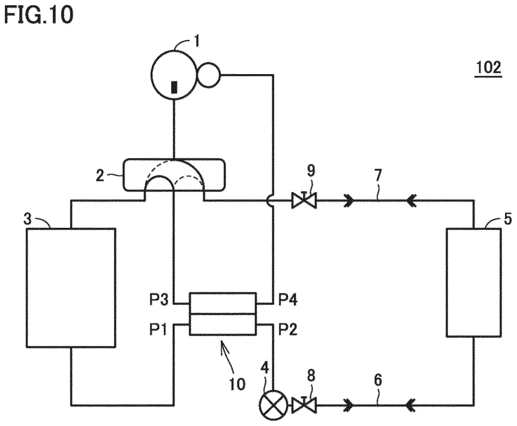

As shown in Fig. 10, an air conditioner 102 according to Embodiment 4 includes a basically similar configuration to that of air conditioner 100 according to Embodiment 1 and is different from air conditioner 100 in that third heat exchanger 10 is provided to perform heat exchange between the non-azeotropic refrigerant mixture flowing between first heat exchanger 3 and first expansion valve 4 and the non-azeotropic refrigerant mixture flowing between four-way valve 2 and the suction port of compressor 1.

In air conditioner 102, third heat exchanger 10 is provided to, in the first state, reduce the temperature of the non-azeotropic refrigerant mixture condensed in first heat exchanger 3 to reduce the degree of dryness of the non-azeotropic refrigerant mixture flowing into second heat exchanger 5.

It suffices that the non-azeotropic refrigerant mixture enclosed in the refrigerant circuit in air conditioner 102 is the same as the non-azeotropic refrigerant mixture enclosed in the refrigerant circuit of air conditioner 100 according to Embodiment 1 or the non-azeotropic refrigerant mixture enclosed in the refrigerant circuit of the air conditioner according to Embodiment 2.

The P-h diagram of the non-azeotropic refrigerant mixture that circulates in the refrigerant circuit when air conditioner 102 is in the first state is the same as the P-h diagram of Fig. 4. Consequently, a temperature difference between the non-azeotropic refrigerant mixture flowing through second heat exchanger 5 and the air is achieved more easily in the first state in air conditioner 102 than in the air conditioner according to Comparative Example 5 which is different from air conditioner 102 only in that it does not include third heat exchanger 10, leading to improved performance in the first state.

### <Modifications>

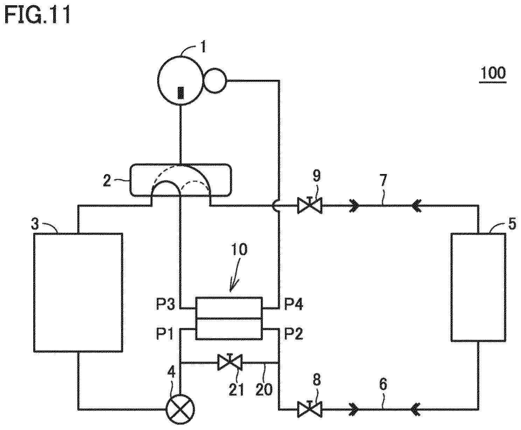

Air conditioners 100 to 102 according to Embodiments 1 to 4 may adopt a modification shown in Fig. 11. As shown in Fig. 11, the refrigerant circuit of air conditioner 100, 101 may further include a bypass flow path 20, which connects first expansion valve 4 to on-off valve 8 and bypasses third heat exchanger 10, and an on-off valve 21, which opens and closes bypass flow path 20. In this case, for example, on-off valve 21 is opened in the first state and closed in the second state. Similarly, the refrigerant circuit of air conditioner 102 may further include a bypass flow path that connects first expansion valve 4 to first heat exchanger 3 and bypasses third heat exchanger 10, and an on-off valve that opens and closes the bypass flow path.

It should be understood that the embodiments disclosed herein have been presented for the purpose of illustration and non- restrictive in every respect. It is therefore intended that the technical scope defined by the present disclosure is defined by claims, not only by the embodiments described above, and encompasses all modifications and variations equivalent in meaning and scope to the claims.

### REFERENCE SIGNS LIST

1 compressor; 2 four-way valve; 3 first heat exchanger; 4 first expansion valve; 5 second heat exchanger; 6 liquid extension pipe; 7 gas extension pipe; 8, 9 on-off valve; 10, 13 third heat exchanger; 11 first tube; 12 second tube; 14 second expansion valve; 15 receiver tank; 16 refrigerant pipe conduit; 100, 101 air conditioner.

## Claims

1. An air conditioner comprising a refrigerant circuit in which a non-azeotropic refrigerant mixture circulates, wherein
the refrigerant circuit includes a compressor, a four-way valve, a first heat exchanger, a first expansion valve, and a second heat exchanger,
the four-way valve is configured to switch between
a first state in which the non-azeotropic refrigerant mixture flows sequentially through the compressor, the first heat exchanger, the first expansion valve, and the second heat exchanger, and
a second state in which the non-azeotropic refrigerant mixture flows sequentially through the compressor, the second heat exchanger, the first expansion valve, and the first heat exchanger,
the refrigerant circuit further includes a third heat exchanger provided to allow heat exchange between
the non-azeotropic refrigerant mixture flowing between the first heat exchanger and the first expansion valve or the non-azeotropic refrigerant mixture flowing between the first expansion valve and the second heat exchanger, and
the non-azeotropic refrigerant mixture flowing between the four-way valve and a suction port of the compressor,
the non-azeotropic refrigerant mixture is a two-refrigerant mixture of R32 and R1234yf, and
a mass fraction of R32 in the non-azeotropic refrigerant mixture is 30% by mass or more.

2. An air conditioner comprising a refrigerant circuit in which a non-azeotropic refrigerant mixture circulates, wherein
the refrigerant circuit includes a compressor, a four-way valve, a first heat exchanger, a first expansion valve, and a second heat exchanger,
the four-way valve is configured to switch between
a first state in which the non-azeotropic refrigerant mixture flows sequentially through the compressor, the first heat exchanger, the first expansion valve, and the second heat exchanger, and
a second state in which the non-azeotropic refrigerant mixture flows sequentially through the compressor, the second heat exchanger, the first expansion valve, and the first heat exchanger,
the refrigerant circuit further includes a third heat exchanger provided to allow heat exchange between
the non-azeotropic refrigerant mixture flowing between the first heat exchanger and the first expansion valve or the non-azeotropic refrigerant mixture flowing between the first expansion valve and the second heat exchanger, and
the non-azeotropic refrigerant mixture flowing between the four-way valve and a suction port of the compressor,
the non-azeotropic refrigerant mixture is a three-refrigerant mixture of R32, R1234yf, and R1123, and
in the non-azeotropic refrigerant mixture, a mass fraction of R32 is 18% by mass or more, and a mass fraction of R1234yf is lower than a mass fraction of R1123.

3. The air conditioner according to claim 2, wherein in the non-azeotropic refrigerant mixture, the mass fraction of R32 is higher than the mass fraction of R1234yf and is lower than the mass fraction of R1123.

4. The air conditioner according to claim 3, wherein in the non-azeotropic refrigerant mixture, the mass fraction of R32 is 20% by mass or more, the mass fraction of R1234yf is less than 20%, and the mass fraction of R1123 is 60% by mass or more.

5. The air conditioner according to any one of claims 1 to 4, wherein
the first heat exchanger is an outdoor heat exchanger,
the second heat exchanger is an indoor heat exchanger, and
the third heat exchanger is provided to allow heat exchange between
the non-azeotropic refrigerant mixture flowing between the first expansion valve and the second heat exchanger, and
the non-azeotropic refrigerant mixture flowing between the four-way valve and the suction port of the compressor.

6. The air conditioner according to claim 5, wherein
the refrigerant circuit further includes
a receiver tank configured to store part of the non-azeotropic refrigerant mixture flowing between the first expansion valve and the second heat exchanger,
a second expansion valve for reducing a pressure of the non-azeotropic refrigerant mixture flowing between the receiver tank and the second heat exchanger, and
a refrigerant pipe conduit connecting the four-way valve to the suction port,
a part of the refrigerant pipe conduit is extended into the receiver tank, and
the third heat exchanger includes the receiver tank and the part of the refrigerant pipe conduit extended into the receiver tank.

7. The air conditioner according to any one of claims 1 to 4, wherein
the first heat exchanger is an outdoor heat exchanger,
the second heat exchanger is an indoor heat exchanger, and
the third heat exchanger is provided to allow heat exchange between
the non-azeotropic refrigerant mixture flowing between the first heat exchanger and the first expansion valve, and
the non-azeotropic refrigerant mixture flowing between the four-way valve and the suction port of the compressor.
